# FASCICULE DE BREVET EUROPEEN

(11) **EP 3 813 992 B1**
(45) Date de publication et mention de la délivrance du brevet: **23.11.2022**
(21) Numéro de dépôt: 19731314.1
(22) Date de dépôt: 21.06.2019
(51) Int. Cl.: B05B 1/20, B01J 4/00, F23L 7/00, F23D 1/00

(54) **ENRICHISSEMENT EN OXYGÈNE ET COMBUSTION D'UN COMBUSTIBLE EN FORME DE PARTICULES SOLIDES ENTRAÎNÉES PAR UN GAZ PORTEUR**
SAUERSTOFFANREICHERUNG UND VERBRENNUNG EINES BRENNSTOFFS IN FORM VON FESTPARTIKELN, DIE VON EINEM TRÄGERGAS BEFÖRDERT WERDEN
OXYGEN ENRICHMENT AND COMBUSTION OF A FUEL IN THE FORM OF SOLID PARTICLES CARRIED BY A CARRIER GAS

(30) Priorité: 26.06.2018 EP 18179848
(43) Date de publication de la demande: 05.05.2021
(73) Titulaire: L'AIR LIQUIDE, SOCIETE ANONYME POUR L'ETUDE ET L'EXPLOITATION DES PROCEDES GEORGES CLAUDE, 75007 Paris (FR); Sociedade Portuguesa do Ar Líquido, 1495-131 Algés (PT)
(72) Inventeur: FERNANDES, Sergio, 1495-131 ALGES (PT)
(74) Mandataire: Air Liquide
(86) Numéro de dépôt international: PCT/EP2019/066538
(87) Numéro de publication internationale: WO 2020/002163

(56) Documents cités:
- WO-A1-2006/032961
- WO-A1-2008/006764
- WO-A1-2012/119193
- JP-A- 2011 122 408
- US-A1- 2004 185 404
- US-A1- 2014 194 050
- US-B1- 6 622 947

## Description

La présente invention concerne la combustion de combustibles en forme de particules solides.

Les combustibles en forme de particules solides, comme par exemple le charbon, le coke de pétrole, les boues pétrolières séchées et les résidus de déchiquetage de déchets sont disponibles en grandes quantités et souvent à prix faible. La combustion d'un combustible solide peut ainsi s'avérer le procédé de combustion le moins cher.

Dans certains cas, la combustion dans une installation industrielle de déchets solides peut s'avérer le procédé de traitement le plus écologique desdits déchets tout en fournissant de l'énergie thermique utile.

Pour les raisons susmentionnées, il est courant de brûler de tels combustibles solides dans des fours industriels, seuls, ou en combinaison avec des combustibles liquides et/ou gazeux.

Or, la combustion de combustibles solides présente également un nombre d'inconvénients.

Ainsi, contrairement au combustibles gazeux et liquides, les combustibles solides ne peuvent pas, en tant que tels, être transportés vers la zone de combustion et être injectés dans la zone de combustion à des débits régulés par simple écoulement. Pour cette raison, les combustibles en forme de particules solides sont transportés et injectés sous la forme d'une suspension de particules solides dans un gaz, dit gaz porteur, ou dans un liquide.

Par nature, les combustibles solides sont plus lents ou difficiles à allumer que les combustibles liquides et, à plus forte raison, les combustibles gazeux de valeur calorifique analogue.

D'autres problèmes qui se posent souvent lors de la combustion de combustibles solides, en particulier, mais pas uniquement, lors de la combustion de combustibles solides à base de déchets (industriels ou non) et/ou à base de farines animales et/ou à base de biomasse, et qui peuvent également retarder ou limiter l'allumage du combustible sont :
- une granulométrie non-homogène et/ou variable,
- une humidité élevée et/ou variable, et
- un pouvoir calorifique inférieur (PCI) faible, non-homogène et/ou variable.

Les combustibles à base de déchets (pneus, papiers, cartons, huiles usagées, plastiques, tissus textiles, biomasse, déchets industriels et municipaux...) sont souvent désignés par l'expression « combustible alternatif » ou encore par l'abréviation anglaise RDF (Refuse Derived Fuel). Il est toutefois noté que la biomasse utilisé dans le combustible n'est pas nécessairement un déchet.

L'allumage tardif ou incomplet du nuage de particules de combustible peut entraîner une combustion incomplète du combustible, et donc une moindre efficacité énergétique du procédé, ainsi que la présence d'imbrulés dans les fumées (notamment du monoxyde de carbone), dans les cendres (par exemple du carbone) ou, quand la combustion du combustible a lieu dans un four pour le traitement d'une charge (par exemple pour la fusion, le (ré)chauffage, la clinkérisation, la cuisson, le frittage, etc. d'une charge), dans ou sur la charge traitée dans la zone de combustion.

La présente invention concerne la combustion de combustibles en forme de particules solides entraînés par un gaz porteur.

Le gaz porteur est traditionnellement de l'air, mais peut également consister en ou comporter d'autres gaz.

Afin d'accélérer et d'améliorer l'allumage et l'oxydation des particules à l'intérieur de la zone de combustion d'un combustible solide en forme de particules entraînées par un gaz porteur, il est connu d'enrichir le combustible solide en oxygène, ou plus correctement formulé, d'enrichir son gaz porteur en oxygène, au point d'injection du combustible et/ou légèrement en amont du point d'injection du combustible et ceci afin d'assurer un contact plus intense entre les particules solides et les molécules d'oxygène lors de l'injection du combustible dans la zone de combustion.

De tels technologies sont notamment décrites dans WO-A-2006/032961, WO-A-2011/051463 et WO-A-2011/051464.

Il est toutefois, pour des raisons évidentes de sécurité, important d'éviter l'allumage du combustible à l'intérieur de son conduit d'écoulement en amont de la zone de combustion et pour cela d'éviter des concentrations en oxygène, et en particulier des concentrations locales en oxygène, trop élevées dans le combustible solide en amont de son injection.

Il convient par conséquent d'optimiser le degré et la ou les positions de l'enrichissement en oxygène du gaz porteur.

Avec les technologies connues citées ci-dessus il est possible de répondre à ces deux besoins. Toutefois, suivant ces technologies connues, afin de modifier la position du ou des points d'enrichissement en oxygène dans le conduit d'écoulement du combustible, par exemple pour répondre à un changement dans les propriétés du combustible solide, il est nécessaire de retirer le dispositif d'enrichissement du conduit d'écoulement et de remplacer ou de modifier ce dispositif avant de le réintroduire dans le conduit, et donc d'interrompre l'enrichissement en oxygène et normalement également l'injection du combustible à travers le conduit d'écoulement pendant cette démarche, notamment afin d'éviter une fuite de combustible solide à travers l'ouverture par laquelle le dispositif d'enrichissement est enlevé du ou réintroduit dans le conduit d'écoulement et/ou afin d'éviter la présence d'une quantité importante d'imbrûlés dans les fumées, dans les cendres et/ou dans ou sur la charge.

La présente invention a pour but de remédier au moins partiellement à ces inconvénients et de fournir des moyens et des procédés plus flexibles pour l'enrichissement en oxygène d'un combustible solide.

La présente invention a plus particulièrement pour but de fournir des moyens et des procédés pour l'enrichissement en oxygène d'un combustible solide qui permettent un changement de la zone ou des zones d'enrichissement sans interruption de l'enrichissement.

La présente invention propose ainsi l'utilisation d'une lance pour l'enrichissement en oxygène d'un écoulement de combustible en forme de particules solides entraînées par un gaz porteur avant et/ou lors de l'injection dudit combustible.

La lance présente un tube extérieur et un deuxième tube à l'intérieur du tube extérieur.

Le tube extérieur de la lance s'étend selon un axe longitudinal et sur une longueur L entre une extrémité amont et une extrémité aval. Le tube extérieur présente une paroi latérale, dite « première paroi latérale », qui est étanche au gaz à l'exception d'une ou plusieurs sections longitudinales, dite « sections perméables », qui sont perméables au gaz. Par « section longitudinale » on comprend dans le présent contexte une section qui s'étend sur une partie de la longueur du tube.

Le deuxième tube présente également une paroi latérale, dite « deuxième paroi latérale » qui est étanche au gaz à l'exception d'une ou plusieurs sections longitudinales, dites « sections perforées », qui présentent des perforations distribuées sur la circonférence du deuxième tube.

Le deuxième tube s'étend également selon l'axe longitudinal et est monté de manière coulissante à l'intérieur du tube extérieur à travers l'extrémité amont du tube extérieur. Le montage coulissant du deuxième tube à l'intérieur du tube extérieur permet de réaliser une ou plusieurs sections, dites « sections de recouvrement » dans lesquelles il y a recouvrement entre une section perforée du deuxième tube et une section perméable du tube extérieur et ceci à des positions variables le long de la longueur L.

La variation d'une position d'une ou des sections de recouvrement peut correspondre à un déplacement le long de l'axe longitudinal du début d'au moins une section de recouvrement, de la fin d'au moins une section de recouvrement ou du début et de la fin d'au moins une section de recouvrement et/ou d'un changement du nombre de sections de recouvrements.

Quand un gaz est introduit dans le deuxième tube de la lance du côté amont du tube extérieur, une telle section de recouvrement permet au gaz d'échapper du deuxième tube à travers les perforations dans la section de recouvrement et de traverser la paroi latérale du tube extérieur à travers une section perméable du tube extérieur dans cette section de recouvrement.

Ainsi, quand une telle lance est montée dans un écoulement d'un combustible solide sous forme de particules entraînées par un gaz porteur et un gaz d'enrichissement en oxygène est introduit dans le deuxième tube du côté amont du tube extérieur, le gaz d'enrichissement peut être injecté dans le combustible solide à travers la ou les sections de recouvrement et ceci à des positions variables le long de la longueur L du tube extérieur.

Le tube extérieur de la lance présente avantageusement une section perméable à proximité de son extrémité aval, de préférence adjacente à l'extrémité aval du tube extérieur.

Suivant une forme de réalisation simple, le tube extérieur de la lance présente une seule section perméable qui peut, notamment, se situer à proximité de l'extrémité aval du tube extérieur, voire adjacente à cette extrémité aval.

Le deuxième tube peut présenter une extrémité aval étanche au gaz, l'extrémité aval du deuxième tube étant située du côté de l'extrémité aval du tube extérieur de la lance.

Quand l'extrémité aval du deuxième tube est étanche au gaz, seul les perforations dans la deuxième paroi permettent à un gaz introduit dans le deuxième tube du côté de l'extrémité amont du tube extérieur d'échapper du deuxième tube.

Suivant une forme de réalisation alternative, le deuxième tube comporte une extrémité aval présentant une ouverture d'injection de gaz, de préférence une buse sonique ou supersonique. Quand un tel deuxième tube est monté à l'intérieur d'un tube extérieur dont l'extrémité aval présente également une ouverture d'injection de gaz, il est possible d'injecter le gaz d'enrichissement non seulement à travers une ou plusieurs sections de recouvrement, mais également à travers l'ouverture d'injection aval du deuxième tube suivi de l'ouverture d'injection aval du tube extérieur.

Dans cette configuration, le débit d'oxygène est partagé entre l'ouverture d'injection aval et la section de recouvrement. Le dimensionnement de l'ouverture d'injection aval du tube extérieur en comparaison avec la taille des pores dans la paroi du tube extérieur, en combinaison avec la superficie du ou des zones de recouvrement, permettent de contrôler la répartition du débit d'oxygène injecté à travers l'ouverture d'injection aval, respectivement à travers la ou les zone(s) de recouvrement.

Une forme avantageuse de réalisation de l'ouverture avale du deuxième et/ou du premier tube extérieur peut être conçue de manière à créer un jet d'oxygène sonique (vitesse = Mach 1 ~ 360 m/s) ou supersonique (vitesse supérieure à Mach 1, de préférence jusqu'à Mach 10) dirigé vers la zone de combustion. Dans ce cas, cette ouverture d'injection aval est avantageusement une buse sonique ou supersonique. Les perforations dans la paroi latérale du deuxième tube peuvent présenter des formes et des orientations diverses, telles que, par exemple, des formes circulaires, rectangulaires, allongées, etc., parallèle à l'axe longitudinal, perpendiculaire à l'axe longitudinal, etc.

Il est généralement souhaitable que la ou les sections perméables sont perméables au gaz grâce à des pores dans la paroi latérale du tube extérieur dans lesdites sections perméables. La taille des pores dans le tube extérieur de la lance est avantageusement choisie de manière à limiter, voire d'éviter que des particules du combustible solide puisse s'encastrer dedans et les bloquer. Ainsi, le diamètre des pores dans la paroi latérale du tube extérieur est avantageusement inférieur au diamètre moyen des particules.

En combinant de telles pores dans la paroi longitudinale du tube extérieur avec des perforations dans la paroi longitudinale du deuxième tube dont la taille (section d'écoulement) est supérieure à la taille des pores, la perte de charge subie par le gaz d'enrichissement lors de son injection à travers la ou les sections de recouvrement est réduite.

Les matériaux du tube extérieur et du deuxième tube sont avantageusement choisis en fonction des fluides avec lesquels ils entrent en contact.

Ainsi, le tube extérieur est avantageusement en un matériau qui résiste bien à l'érosion par les particules du combustible solide.

Le deuxième tube, et de préférence également le tube extérieur, est/sont en des matériaux qui résistent à l'oxydation par le gaz d'enrichissement. Ainsi, le deuxième tube et/ou le tube extérieur sont avantageusement réalisés en de l'acier inoxydable.

Pour l'enrichissement en oxygène d'un combustible solide, le deuxième tube est relié à une source d'un oxydant, utilisé en tant que gaz d'enrichissement, l'oxydant ayant une teneur en oxygène supérieur à la teneur en oxygène du gaz porteur du combustible solide à enrichir. Ainsi, quand le gaz porteur est de l'air, l'oxydant utilisé en tant que gaz d'enrichissement présente une teneur en oxygène supérieure à celle de l'air. Le deuxième tube, qui se trouve à l'intérieur du tube extérieur de la lance du brûleur, est avantageusement relié du côté de l'extrémité amont du tube extérieur à une source d'un oxydant ayant une teneur en oxygène à l'état gazeux de 50%vol à 100%vol, de préférence de 80%vol à 100%vol et encore de préférence de 90.0%vol à 99.5%vol.

Quand le débit d'oxydant nécessaire pour l'enrichissement du combustible solide est relativement faible, la source d'oxydant peut, par exemple, être un réservoir d'un oxydant liquéfié ayant une teneur en oxygène à l'état gazeux d'au moins 90%vol.

D'autres sources d'oxydant possibles sont des pipelines pour le transport d'un tel oxydant liquéfié, ainsi que des unités de séparation des gaz de l'air.

La présente invention concerne également un brûleur pour la combustion d'un combustible solide sous forme de particules entraînées par un gaz porteur.

Le brûleur suivant l'invention comporte un passage pour l'écoulement du combustible en forme de particules solides entraînés par un gaz porteur. Ce passage se termine en une buse d'injection pour l'injection dudit combustible dans une zone de combustion en aval du brûleur. Une lance suivant une des formes de réalisation décrites ci-dessus est montée à l'intérieur du passage avec l'axe longitudinal en substance dans la direction d'écoulement du combustible, c'est-à-dire en substance dans la direction de l'axe longitudinal du passage du brûleur, afin de permettre l'enrichissement en oxygène du combustible solide écoulant dans le passage.

Pour le fonctionnement du brûleur, le passage est relié à une source d'un combustible en forme de particules solides entraînés par un gaz porteur. De tels sources sont connues, notamment dans le domaine de la cimenterie où l'utilisation de combustibles en forme de particules solides entraînés par un gaz porteur est courante dans les fours rotatifs. Un exemple d'une telle source/d'un tel système est décrit plus en détail dans « The Cement Plant Operations Handbook » by Philip A Alsop, Sixth Edition, pages 51 to 54.

Comme déjà indiqué ci-dessus, pour l'enrichissement en oxygène du combustible solide, le deuxième tube est relié à une source d'un oxydant, utilisé en tant que gaz d'enrichissement, ledit oxydant ayant une teneur en oxygène supérieur à la teneur en oxygène du gaz porteur du combustible solide à enrichir.

Les particules du combustible solide peuvent être du charbon pulvérulent, du petcoke pulvérulent, du coke pulvérulent, des déchets solides broyés, des farines animales, de biomasse. Le combustible solide peut également comporter un mélange de particules de différents types et notamment un mélange d'au moins deux de ces catégories de particules combustibles.

Comme déjà indiqué ci-dessus, le gaz porteur est typiquement de l'air. Toutefois, d'autres gaz porteurs sont également envisageables. Ainsi, le gaz porteur peut consister en ou comprendre des fumées de combustion (recyclées), par exemple en mélange avec de l'air.

L'extrémité aval du tube extérieur peut se situer en amont de la buse d'injection du passage du brûleur, au niveau de cette buse d'injection, voire en aval de cette buse d'injection.

Quand l'extrémité aval du tube extérieur se trouve en amont de la buse d'injection, l'enrichissement en oxygène du combustible au moyen de la lance se fait entièrement à l'intérieur du passage d'écoulement du brûleur et donc en amont de l'injection du combustible dans la zone de combustion. Avec une lance dont l'extrémité aval se situe au niveau de la buse d'injection, il est possible d'enrichir le combustible à la fois en amont de la zone de combustion et au niveau de l'injection du combustible dans la zone de combustion. Finalement, un brûleur dont la lance s'étend au-delà de la buse d'injection du brûleur permet un enrichissement en oxygène à la fois en amont, en aval et le cas échéant également au niveau de l'injection du combustible dans la zone de combustion. Ceci nécessite évidemment des positions correspondantes de la ou des sections perméables de la première paroi du tube extérieur, de la ou des sections perforées de la deuxième paroi du deuxième tube et, le cas échéant des ouvertures d'injections aux extrémités aval du deuxième tube et du tube extérieur.

La présente invention concerne également une installation de combustion présentant une zone de combustion et comportant au moins un brûleur suivant l'une quelconque des formes de réalisation décrites ci-dessus dont la buse d'injection est dirigée vers cette zone de combustion.

L'invention est particulièrement utile dans le cas d'une installation comportant un four rotatif. Un tel four rotatif présente un axe de rotation, la zone de combustion se trouvant à l'intérieur du four rotatif. Un tel four rotatif comporte en règle général une enveloppe en substance cylindrique autour de cette zone de combustion, ladite enveloppe s'étendant entre deux extrémités du four le long de l'axe de rotation.

L'axe de rotation d'un tel four est typiquement horizontal ou forme un angle entre 1 et 10 degrés, de préférence entre 2 et 5 degrés, avec l'horizontal, notamment quand une charge doit couler par gravité d'une extrémité du four (extrémité supérieure) à l'autre extrémité du four (extrémité inférieure).

Dans ce cas, au moins un brûleur suivant l'invention est avantageusement monté dans une extrémité du four rotatif.

Dans les fours rotatifs dans lesquels une charge coule par gravité de l'extrémité supérieure du four à l'extrémité inférieure du four, un brûleur est typiquement installé à l'extrémité inférieure du four de manière à ce que les gaz de combustion générés évoluent en contre-courant avec la charge.

Des exemples de tels fours rotatifs pour lesquels l'invention est bénéfique sont les fours rotatifs pour la production de clinker, de argile expansée, de chaux ou de plâtre et pour l'incinération de déchets

Un aspect de la présente invention est l'utilisation d'une lance suivant l'une quelconque des formes de réalisation décrites ci-dessus pour l'enrichissement en oxygène d'un combustible en forme de particules solides entraînées par un gaz porteur.

Pour cela, le deuxième tube de la lance est fluidiquement relié du côté de l'extrémité amont du tube à une source de l'oxydant, l'oxydant ayant une teneur en oxygène supérieure à la teneur en oxygène du gaz porteur.

Un autre aspect de la présente invention est l'utilisation d'un brûleur suivant l'une quelconque des formes de réalisation décrites ci-dessus pour l'enrichissement en oxygène et la combustion d'un combustible en forme de particules solides entraînées par un gaz porteur.

Pour cela, le passage du brûleur est fluidiquement relié à une source du combustible et le deuxième tube de la lance est fluidiquement relié du côté de l'extrémité amont du tube à une source de l'oxydant, l'oxydant ayant une teneur en oxygène supérieure à la teneur en oxygène du gaz porteur.

L'invention concerne ainsi également un procédé d'enrichissement en oxygène d'un écoulement de combustible en forme de particules solides entraînées par un gaz porteur, cet enrichissement étant réalisé au moyen d'une lance suivant l'une quelconque des formes de réalisation décrites.

Selon ce procédé, le combustible coule à l'intérieur d'un passage selon une direction d'écoulement. Un oxydant ayant une teneur en oxygène supérieure à la teneur en oxygène du gaz porteur est introduit dans le deuxième tube de la lance du côté de l'amont du tube extérieur, la lance étant positionnée à l'intérieur du passage en substance selon la direction d'écoulement du combustible. Au moins une partie, et typiquement la totalité, dudit oxydant est introduite dans l'écoulement du combustible à travers au moins une section de recouvrement de la lance.

De manière analogue, l'invention concerne aussi un procédé de combustion d'un combustible en forme de particules solides entraînées par un gaz porteur au moyen d'un brûleur suivant l'une quelconque des formes de réalisation décrites ou encore au moyen d'une installation suivant l'une des formes de réalisation décrites.

Selon ce procédé le combustible coule à l'intérieur du passage du brûleur selon une direction d'écoulement. Un oxydant ayant une teneur en oxygène supérieure à la teneur en oxygène du gaz porteur est introduit dans le deuxième tube de la lance du côté de l'amont du tube extérieur, la lance étant positionnée à l'intérieur du passage en substance selon la direction d'écoulement du combustible. Au moins une partie, et typiquement la totalité, dudit oxydant est introduite dans l'écoulement du combustible à travers au moins une section de recouvrement de la lance.

Le passage du brûleur se termine de préférence en une buse d'injection pour l'injection du combustible dans une zone de combustion située en aval du brûleur. La zone de combustion peut se trouver dans un four, tel qu'un four rotatif, de préférence sélectionné parmi les fours rotatifs pour la production de clinker, les fours rotatifs pour la production de plâtre ou de chaux, les fours pour la production d'argile expansée, les fours rotatifs d'incinération, etc.

Comme déjà indiqué précédemment, le gaz porteur peut être choisi parmi de l'air, du CO₂, des fumées (recyclées) ou des mélanges d'au moins deux desdits gaz, l'air étant le gaz porteur le plus courant à cause de sa disponibilité.

L'oxydant présente avantageusement une teneur en oxygène de 50%vol à 100%vol, de préférence de 80%vol à 100%vol et encore de préférence de 90.0%vol à 99.5%vol.

Il peut être fourni au moyen d'un réservoir d'oxydant liquéfié, d'un pipeline d'oxydant liquéfié ou d'une unité de séparation des gaz de l'air.

Les moyens ci-dessus sont particulièrement utiles quand les particules solides sont choisies parmi le charbon pulvérulent, le petcoke pulvérulent, le coke pulvérulent, les déchets solides broyés et des mélanges comportant un ou plusieurs desdites catégories de particules combustibles.

Les procédés suivant l'invention permettent de faire varier la position de la au moins une section de recouvrement le long de la longueur L du tube extérieur par coulissement du deuxième tube à l'intérieur dudit tube extérieur. Pour cela il n'est pas nécessaire d'arrêter/d'interrompre l'écoulement du combustible ni d'arrêter/d'interrompre son enrichissement en oxygène au moyen de la lance ou de retirer la lance du brûleur/du four.

L'invention et ses avantages sont illustrés dans les exemples ci-après, référence étant faite aux figures 1 à 8 dans lesquelles :
- la figure 1 est une représentation schématique d'une forme de réalisation d'un tube extérieur d'une lance pouvant être utilisée suivant l'invention,
- la figure 2 est une représentation schématique d'une forme de réalisation d'un deuxième tube (tube intérieur) d'une lance pouvant être utilisée suivant l'invention,
- la figure 3 est une représentation schématique, avec une coupe partielle, d'une lance pouvant être utilisée suivant l'invention et comportant les tubes des figures 1 et 2,
- les figures 4 et 5 sont des représentations schématiques, avec une coupe partielle, de la lance de la figure 2 avec des positions différentes du deuxième tube,
- la figure 6 est une représentation schématique, avec une coupe partielle, d'une autre forme de réalisation d'une lance pouvant être utilisée suivant l'invention,
- la figure 7 est une représentation schématique d'un brûleur suivant l'invention comportant la lance suivant la figure 6, mais avec une position différente du deuxième tube, et
- la figure 8 est une représentation schématique d'un four rotatif équipé avec un tel brûleur.

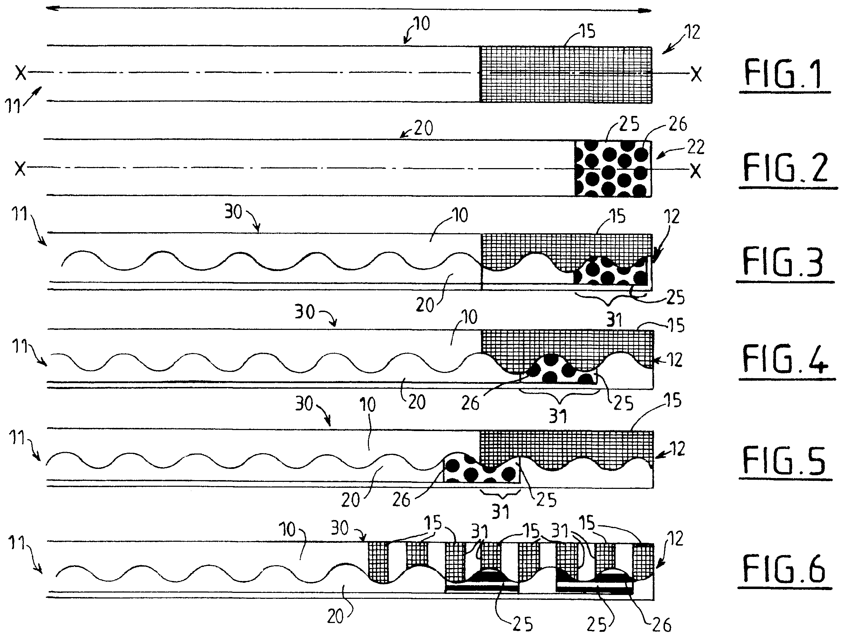

La figure 1 montre un tube extérieur 10 s'étendant sur une longueur L selon un axe longitudinal X-X entre une extrémité amont 11 et une extrémité aval 12. La paroi latérale du tube extérieur 10 est étanche au gaz, à l'exception d'une zone perméable 15 à l'extrémité aval 12. Dans cette zone perméable 15, la paroi latérale du tube 10 présente des pores perméables au gaz. La taille des pores a été sélectionné de manière à ce que, quand une lance comportant le tube extérieur 15 se trouve à l'intérieur d'un écoulement d'un combustible sous forme de particules solides entraînées par un gaz porteur, ces particules sont généralement trop grandes pour pénétrer dans les pores.

La figure 2 montre un deuxième tube 20 apte à être glissé dans le tube extérieur 10 de la figure 1. Ce deuxième tube s'étend également selon l'axe X-X. Sa paroi latérale est étanche au gaz, à l'exception d'une zone perforée 25 à l'extrémité aval 22 du deuxième tube 20. Dans la forme de réalisation illustrée, les perforations 26 sont de forme circulaire.

La figure 3 montre une lance 30 ayant le deuxième tube 20 inséré de manière coulissante dans le tube extérieur 10 à partir de l'extrémité amont 11 dudit tube extérieur 10. Dans la figure 3, le deuxième tube 20 est inséré jusqu'à l'extrémité aval 12 du tube extérieur et une section de recouvrement 31 est créée à l'extrémité aval de la lance 30. Quand un gaz oxydant est introduit dans le deuxième tube 20 du côté de l'extrémité amont 11 du tube extérieur, ce gaz oxydant coule, à l'intérieur du deuxième tube 20 jusqu'à la zone perforée 25 où le gaz sort du deuxième tube 20 à travers les perforation 25 pour ensuite sortir du tube extérieur 10 à travers les pores de la zone perméable 15 dans la section de recouvrement 31.

Quand la lance est située dans un écoulement d'un combustible sous forme de particules entraînées par un gaz porteur, il est ainsi possible d'enrichir le combustible, ou plutôt son gaz porteur, au moyen du gaz oxydant injecté dans l'écoulement de combustible à travers la section de recouvrement 31 de la lance 30.

Dans la figure 4, le deuxième tube 20 est positionné un peu plus en retrait dans le tube extérieur 10, de manière à ce que la section de recouvrement 31 est maintenant positionné un peu plus en amont dans la lance 30. Ainsi, quand la lance 30 est utilisée pour l'enrichissement en oxygène d'un écoulement de combustible, la zone d'enrichissement sera également située un peu plus en amont.

Dans la figure 5, le deuxième tube 20 est positionné encore plus en retrait dans le tube extérieur 10, de manière à ce qu'une partie de la zone perforée 25 du deuxième tube 10 se situe en amont de la zone perméable 15 du tube extérieur 10. Le résultat est une section de recouvrement 31 située encore plus en amont et plus courte.

La figure 6 montre une forme de réalisation alternative de la lance, dans laquelle le tube extérieur 10 comporte 8 zones perméables 15 et dans laquelle le deuxième tube 20 comporte deux zones perforées 25 avec des perforations rectangulaires 25 s'étendant dans la direction de l'axe X-X. Quatre sections de recouvrement 31 sont ainsi créées.

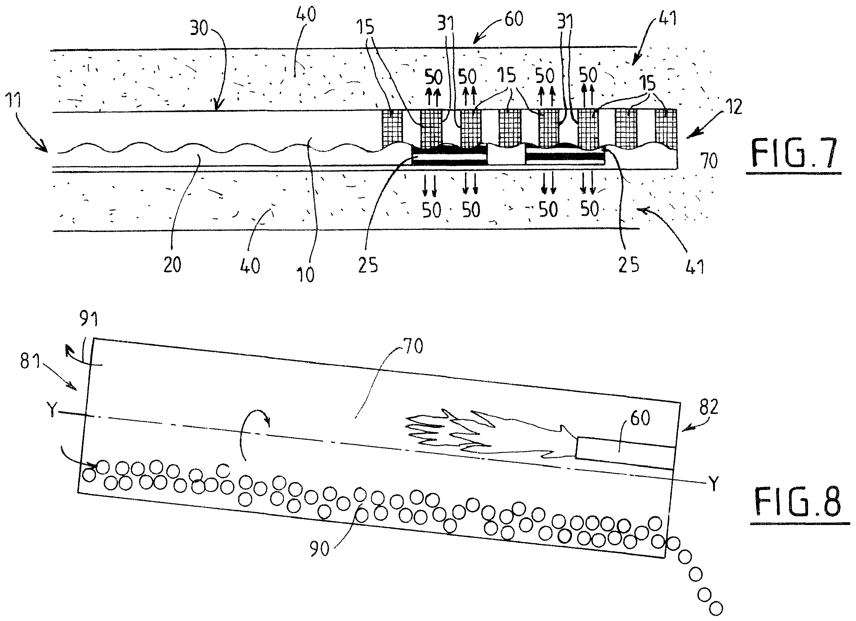

La figure 7 montre un brûleur 60 suivant l'invention comportant un passage 40 pour le transport du combustible solide vers la zone de combustion aval 70. La lance 30 est celle de la figure 6 mais avec le deuxième tube 20 situé un peu plus en retrait dans le tube extérieur 10. Le passage 40 du brûleur 60 se termine en une buse d'injection 41 à travers laquelle le combustible solide est injecté dans la zone de combustion 70. Quand on introduit de l'oxygène dans le deuxième tube 20 du côté de l'extrémité amont 11 du tube extérieur 10, l'oxygène traverse le tube intérieur 20 (deuxième tube) pour être injecté, symbolisé par les flèches 50, dans l'écoulement de combustible à travers les quatre sections de recouvrement 31.

La figure 8 montre un exemple d'un four rotatif 80 équipé d'un brûleur 60 suivant l'invention. Le four présente un axe de rotation Y-Y légèrement incliné par rapport à l'horizontal. Ainsi, une charge 90 à traiter (par exemple à cuire ou à fondre) introduit dans le four 80 par l'extrémité 81 est transportée par gravité à travers la zone de combustion 70 vers l'autre extrémité 82 où elle est évacuée du four. Un brûleur 60 suivant l'invention est monté dans l'extrémité 82 du four 80 et les gaz de combustion 91 générés par la combustion du combustible solide évoluent à contre-courant avec la charge 90 et sont évacuées du four 80 par l'extrémité 81.

La présente invention et ses avantages seront mieux compris à la lumière de l'exemple ci-après illustrant un cas de mise en œuvre particulier de la présente invention.

Un four rotatif pour la fabrication de clinkers dans une cimenterie est muni, à son extrémité inférieure, d'un brûleur multi-combustibles. Ledit brûleur comporte un passage pour l'écoulement de combustibles à base de déchets sous formes de particules solides.

Lesdites particules sont amenées vers le brûleur, transportées à travers le passage et injectées dans la zone de combustion aval du four rotatif à travers l'ouverture d'injection dudit passage entrainés par un flux d'air.

Les combustibles à base de déchets présentent des compositions et taux d'humidité variables et une granulométrie non-uniforme, le diamètre de certaines particules pouvant atteindre jusqu'à 20, 30 ou 40 mm, voire jusqu'à 100 mm.

Par conséquent, les propriétés d'allumage et de combustion desdits combustibles varient considérablement dans le temps.

Afin d'assurer un allumage rapide et une combustion plus efficace en toute sécurité de ces combustibles après leur injection dans le four, une lance suivant l'invention est installée dans le passage du brûleur. L'axe longitudinal de la lance coïncide avec l'axe longitudinal du passage de manière à laisser une zone libre annulaire suffisante dans le passage autour de la lance pour l'écoulement du combustible solide.

Le deuxième tube (tube intérieur) de la lance est relié à une source d'oxygène dont la pureté peut aller jusqu'à 100%. En pratique, la source d'oxygène fournira par exemple de l'oxygène dit "oxygène industriel", d'une pureté de 98.5%. Le débit d'oxygène fournit au deuxième tube est régulé au moyen d'un débitmètre et d'une vanne automatique.

Afin de maintenir un allumage rapide et une combustion complète du combustible à base de déchets lors d'un changement dans la composition/humidité/granulométrie du combustible, la position du deuxième tube dans le tube extérieur de la lance est ajustée de manière à modifier les positions des zones de recouvrement de la lance et ainsi de faire varier les positions des zones d'enrichissement en oxygène de l'air entraînant le combustible dans le passage du brûleur, voire, comme expliqué ci-dessus, au point d'injection du combustible dans la zone de combustion ou encore légèrement en aval dudit point d'injection.

L'analyse des fumées évacuées du four à son extrémité supérieure et l'inspection du clinker évacué du four rotatif à son extrémité inférieure montrent qu'il était possible d'assurer une combustion essentiellement complète du combustible à teneur en oxygène résiduel quasi constante des fumées malgré les variations dans le combustible à base de déchets.

La présente invention permet ainsi, d'une part, d'enrichir un combustible en forme de particules solides entraînées par un gaz porteur en oxygène et ainsi d'assurer un allumage et une combustion efficace du combustible à l'intérieur de la zone de combustion. Ce qui plus est, l'invention permet de réaliser un tel enrichissement en oxygène sans risque d'allumage précoce du combustible, c'est-à-dire sans risque d'allumage du combustible en amont de son injection dans la zone de combustion. L'invention permet également d'ajuster cet enrichissement en oxygène du combustible, par exemple en réponse à un changement dans les propriétés du combustible (composition, humidité, granulométrie, etc.) sans interruption de la combustion et sans interruption de l'enrichissement en oxygène du combustible.

## Revendications

1. Utilisation pour l'enrichissement en oxygène d'un écoulement de combustible en forme de particules solides entraînées par un gaz porteur, d'une lance (30) présentant :
• un tube extérieur (10) s'étendant selon un axe longitudinal sur une longueur L entre une extrémité amont (11) et une extrémité aval (12), et
• un deuxième tube (20) s'étendant également selon cet axe longitudinal,
le tube extérieur (10) présentant une première paroi latérale étanche au gaz à l'exception d'une ou plusieurs sections longitudinales perméables au gaz, dites sections perméables (15),
le deuxième tube (20) présentant une deuxième paroi latérale étanche au gaz à l'exception d'une ou plusieurs sections longitudinales, dites sections perforées (25), présentant des perforations (26) distribuées sur la circonférence du deuxième tube (20),
le deuxième tube étant monté de manière coulissante à l'intérieur du tube extérieur (10) à travers l'extrémité amont (11) du tube extérieur (10) de manière à permettre la réalisation à des positions variables le long de la longueur L d'une ou plusieurs sections de recouvrement (31) dans lesquelles il y a recouvrement entre une section perforée (25) du deuxième tube (20) et une section perméable (15) du tube extérieur (10).

2. Utilisation suivant la revendication 1, dans laquelle l'extrémité aval (12) du tube extérieur (10) est étanche au gaz.

3. Utilisation suivant la revendication 1, dans laquelle l'extrémité aval (12) du tube extérieur (10) présente une ouverture d'injection de gaz, de préférence une buse sonique ou supersonique.

4. Utilisation suivant l'une quelconque des revendications précédentes, dans laquelle le deuxième tube (20) est relié du côté de l'extrémité amont (11) du tube extérieur (10) à une source d'un oxydant ayant une teneur en oxygène à l'état gazeux 50%vol à 100%vol, de préférence de 80%vol à 100%vol et encore de préférence de 90.0%vol à 99.5%vol.

5. Brûleur (60) comportant un passage (40) pour l'écoulement d'un combustible en forme de particules solides entraînées par un gaz porteur, ledit passage se terminant en une buse d'injection (41) pour l'injection dudit combustible dans une zone de combustion en aval (70) du brûleur (60), ledit brûleur (60) étant **caractérisé en ce qu'**une lance (31) telle que décrite dans l'une quelconque des revendications précédentes est montée à l'intérieur dudit passage (40) en substance dans la direction d'écoulement du combustible.

6. Brûleur (60) suivant la revendication 5, dans lequel le passage (40) est relié à une source d'un combustible en forme de particules solides entraînées par un gaz porteur.

7. Brûleur (60) suivant l'une des revendications 5 ou 6, dans lequel l'extrémité aval (12) du tube extérieur (10) se situe en amont de la buse d'injection (41), au niveau de la buse d'injection (41) ou en aval de la buse d'injection (41) du passage (40).

8. Installation de combustion présentant une zone de combustion (70) et comportant au moins un brûleur (60) suivant l'une quelconque des revendications 5 à 7 dont la buse d'injection (41) est dirigée vers ladite zone de combustion (70).

9. Installation suivant la revendication 8, comportant un four rotatif (80) présentant un axe de rotation et à l'intérieur duquel se trouve la zone de combustion (70).

10. Procédé d'enrichissement en oxygène d'un écoulement de combustible en forme de particules solides entraînées par un gaz porteur au moyen d'une utilisation suivant l'une quelconque des revendications 1 à 4, procédé dans lequel :
• le combustible coule à l'intérieur d'un passage (40) selon une direction d'écoulement,
• un oxydant ayant une teneur en oxygène supérieure à la teneur en oxygène du gaz porteur est introduit dans le deuxième tube (20) de la lance (31) du côté de l'extrémité amont (11) du tube extérieur (10), la lance (31) étant positionnée à l'intérieur du passage (40) en substance selon la direction d'écoulement du combustible, au moins une partie dudit oxydant étant introduite dans l'écoulement du combustible à travers la au moins une section de recouvrement (31) de la lance (31).

11. Procédé de combustion d'un combustible en forme de particules solides entraînées par un gaz porteur au moyen d'un brûleur (60) suivant l'une quelconque des revendications 5 à 7 ou au moyen d'une installation suivant l'une des revendications 8 à 9, procédé dans lequel :
• le combustible coule à l'intérieur du passage (40) du brûleur (60) selon une direction d'écoulement,
• un oxydant ayant une teneur en oxygène supérieure à la teneur en oxygène du gaz porteur est introduit dans le deuxième tube (20) de la lance (31) du côté de l'extrémité amont (11) du tube extérieur (10), la lance (31) étant positionnée à l'intérieur du passage (40) en substance selon la direction d'écoulement du combustible,
au moins une partie dudit oxydant étant introduite dans l'écoulement du combustible à travers la au moins une section de recouvrement (31) de la lance (31).

12. Procédé suivant la revendication 10 ou 11, dans lequel le gaz porteur est choisi parmi de l'air, du CO₂, des fumées recyclées ou des mélanges d'au moins deux desdits gaz.

13. Procédé suivant l'une quelconque des revendications 10 à 12, dans lequel l'oxydant présente une teneur en oxygène 50%vol à 100%vol, de préférence de 80%vol à 100%vol et encore de préférence de 90.0%vol à 99.5%vol.

14. Procédé suivant l'une quelconque des revendications 10 à 13, dans lequel les particules solides sont choisi parmi le charbon pulvérulent, le petcoke pulvérulent, le coke pulvérulent, les déchets solides broyés et des mélanges comportant un ou plusieurs desdites catégories de particules.

15. Procédé suivant l'une quelconque des revendications 10 à 14, dans lequel on fait varier la position de la au moins une section de recouvrement (31) le long de la longueur L par coulissement du deuxième tube (20) à l'intérieur du tube extérieur (10).

## Patentansprüche

1. Verwendung eines Strahlrohrs (30) zur Sauerstoffanreicherung eines Brennstoffstroms in Form von Feststoffpartikeln, die von einem Trägergas mitgerissen werden, wobei das Strahlrohr Folgendes aufweist:
• ein äußeres Rohr (10), das sich entlang einer Längsachse über eine Länge L zwischen einem vorgelagerten Ende (11) und einem nachgelagerten Ende (12) erstreckt, und
• ein zweites Rohr (20), das sich ebenfalls entlang dieser Längsachse erstreckt,
wobei das äußere Rohr (10) eine erste gasdichte Seitenwand mit Ausnahme eines oder mehrerer gasdurchlässiger Längsabschnitte, sogenannte durchlässige Abschnitte (15), aufweist, wobei das zweite Rohr (20) eine zweite gasdichte Seitenwand mit Ausnahme eines oder mehrerer Längsabschnitte, sogenannte perforierte Abschnitte (25), aufweist, die über den Umfang des zweiten Rohrs (20) verteilte Perforationen (26) aufweisen, wobei das zweite Rohr verschiebbar innerhalb des äußeren Rohrs (10) durch das vorgelagerte Ende (11) des äußeren Rohrs (10) so montiert ist, dass an variablen Positionen entlang der Länge L einer oder mehrere Abdeckungsabschnitte (31) ermöglicht werden können, bei denen eine Abdeckung zwischen einem perforierten Abschnitt (25) des zweiten Rohrs (20) und einem durchlässigen Abschnitt (15) des äußeren Rohrs (10) besteht.

2. Verwendung nach Anspruch 1, bei der das nachgelagerte Ende (12) des äußeren Rohrs (10) gasdicht ist.

3. Verwendung nach Anspruch 1, bei der das nachgelagerte Ende (12) des äußeren Rohrs (10) eine Gaseinblasöffnung aufweist, vorzugsweise eine Schalloder Überschalldüse.

4. Verwendung nach einem der vorhergehenden Ansprüche, bei der das zweite Rohr (20) auf der Seite des vorgelagerten Endes (11) des äußeren Rohrs (10) mit einer Quelle eines Oxidationsmittels mit einem Gehalt von Sauerstoff im gasförmigen Zustand von 50 Vol.-% bis 100 Vol.-%, vorzugsweise von 80 Vol.-% bis 100 Vol.-% und besonders bevorzugt von 90,0 Vol.-% bis 99,5 Vol.-% verbunden ist.

5. Brenner (60) mit einem Durchgang (40) für den Brennstoffstrom in Form von Feststoffpartikeln, die von einem Trägergas mitgerissen werden, wobei der Durchgang in einer Einspritzdüse (41) zum Einspritzen des Brennstoffs in eine nachgelagerte Verbrennungszone (70) des Brenners (60) endet, wobei der Brenner (60) **dadurch gekennzeichnet ist, dass** ein Strahlrohr (31) nach einem der vorhergehenden Ansprüche innerhalb des Durchgangs (40) im Wesentlichen in Richtung des Brennstoffstroms angebracht ist.

6. Brenner (60) nach Anspruch 5, bei dem der Durchgang (40) mit einer Quelle eines Brennstoffs in Form von Feststoffpartikeln, die von einem Trägergas mitgerissen werden, verbunden ist.

7. Brenner (60) nach einem der Ansprüche 5 oder 6, bei dem das nachgelagerte Ende (12) des äußeren Rohrs (10) vor der Einspritzdüse (41), auf Höhe der Einspritzdüse (41) oder nach der Einspritzdüse (41) des Durchgangs (40) angeordnet ist.

8. Verbrennungsanlage mit einer Verbrennungszone (70) und mindestens einem Brenner (60) nach einem der Ansprüche 5 bis 7, dessen Einspritzdüse (41) auf die Verbrennungszone (70) gerichtet ist.

9. Anlage nach Anspruch 8, die einen Drehrohrofen (80) mit einer Rotationsachse aufweist, in der sich die Verbrennungszone (70) befindet.

10. Verfahren zur Sauerstoffanreicherung eines Brennstoffstroms in Form von Feststoffpartikeln, die von einem Trägergas mitgerissen werden, mittels einer Verwendung nach einem der Ansprüche 1 bis 4, bei dem:
• der Brennstoff innerhalb eines Durchgangs (40) gemäß einer Strömungsrichtung strömt,
• ein Oxidationsmittel mit einem höheren Sauerstoffgehalt als dem Sauerstoffgehalt des Trägergases in das zweite Rohr (20) des Strahlrohrs (31) auf der Seite des vorgelagerten Endes (11) des äußeren Rohrs (10) eingeführt wird, wobei das Strahlrohr (31) innerhalb des Durchgangs (40) im Wesentlichen gemäß der Strömungsrichtung des Brennstoffs positioniert ist, wobei mindestens ein Teil des Oxidationsmittels in die Brennstoffströmung durch den mindestens einen Abdeckungsabschnitt (31) des Strahlrohrs (31) eingeführt wird.

11. Verfahren zur Verbrennung eines Brennstoffs in Form von Feststoffpartikeln, die von einem Trägergas mittels eines Brenners (60) mitgerissen werden, nach einem der Ansprüche 5 bis 7 oder mittels einer Anlage nach einem der Ansprüche 8 bis 9, bei dem:
• der Brennstoff innerhalb eines Durchgangs (40) des Brenners (60) gemäß einer Strömungsrichtung strömt,
• ein Oxidationsmittel mit einem höheren Sauerstoffgehalt als dem Sauerstoffgehalt des Trägergases in das zweite Rohr (20) des Strahlrohrs (31) auf der Seite des vorgelagerten Endes (11) des äußeren Rohrs (10) eingeführt wird, wobei das Strahlrohr (31) innerhalb des Durchgangs (40) im Wesentlichen gemäß der Strömungsrichtung des Brennstoffs positioniert ist,
wobei mindestens ein Teil des Oxidationsmittels in die Brennstoffströmung durch den mindestens einen Abdeckungsabschnitt (31) des Strahlrohrs (31) eingeführt wird.

12. Verfahren nach Anspruch 10 oder 11, bei dem das Trägergas ausgewählt ist aus Luft, CO₂, rezyklierten Rauchgasen oder Mischungen aus mindestens zwei der genannten Gase.

13. Verfahren nach einem der Ansprüche 10 bis 12, bei dem das Oxidationsmittel einen Gehalt von Sauerstoff von 50 Vol.-% bis 100 Vol.-%, vorzugsweise von 80 Vol.- % bis 100 Vol.-% und besonders bevorzugt von 90,0 Vol.- % bis 99,5 Vol.-% aufweist.

14. Verfahren nach einem der Ansprüche 10 bis 13, bei dem die Feststoffpartikel ausgewählt sind aus pulverisierter Kohle, pulverisiertem Petrolkoks, pulverisiertem Koks, gemahlenen festen Abfällen und Mischungen, die eine oder mehrere dieser Partikelklassen aufweisen.

15. Verfahren nach einem der Ansprüche 10 bis 14, bei dem die Position des mindestens einen Abdeckabschnitts (31) entlang der Länge L durch Verschieben des zweiten Rohrs (20) innerhalb des äußeren Rohrs (10) verändert wird.

## Claims

1. Use, for the oxygen enrichment of a flow of fuel in the form of solid particles carried by a carrier gas, of a lance (30) having:
• an outer tube (10) extending along a longitudinal axis over a length L between an upstream end (11) and a downstream end (12), and
• a second tube (20) also extending along this longitudinal axis,
the outer tube (10) having a first lateral wall that is gastight except for one or more longitudinal sections that are gas-permeable, known as permeable sections (15), the second tube (20) having a second lateral wall that is gastight except for one or more longitudinal sections, known as perforated sections (25), that have perforations (26) distributed over the circumference of the second tube (20),
the second tube being mounted so as to slide inside the outer tube (10) through the upstream end (11) of the outer tube (10) so as to make it possible to create, at variable positions along the length L, one or more overlap sections (31) in which there is an overlap between a perforated section (25) of the second tube (20) and a permeable section (15) of the outer tube (10).

2. Use according to Claim 1, wherein the downstream end (12) of the outer tube (10) is gastight.

3. Use according to Claim 1, wherein the downstream end (12) of the outer tube (10) has a gas injection opening, preferably a sonic or supersonic nozzle.

4. Use according to any one of the preceding claims, wherein the second tube (20) is connected on the side of the upstream end (11) of the outer tube (10) to a source of an oxidant having an oxygen content in the gaseous state of 50 vol% to 100 vol%, preferably from 80 vol% to 100 vol% and even more preferably from 90.0 vol% to 99.5 vol%.

5. Burner (60) having a passage (40) for the flow of a fuel in the form of solid particles carried by a carrier gas, said passage ending in an injection nozzle (41) for the injection of said fuel into a combustion zone (70) downstream of the burner (60), said burner (60) being **characterized in that** a lance (31) as described in any one of the preceding claims is mounted inside said passage (40) substantially in the direction of flow of the fuel.

6. Burner (60) according to Claim 5, wherein the passage (40) is connected to a source of a fuel in the form of solid particles carried by a carrier gas.

7. Burner (60) according to either of Claims 5 and 6, wherein the downstream end (12) of the outer tube (10) is situated upstream of the injection nozzle (41), at the level of the injection nozzle (41) or downstream of the injection nozzle (41) of the passage (40).

8. Combustion installation having a combustion zone (70) and having at least one burner (60) according to any one of Claims 5 to 7 of which the injection nozzle (41) is directed towards said combustion zone (70).

9. Installation according to Claim 8, having a rotary furnace (80) having an axis of rotation and inside which is the combustion zone (70).

10. Method for oxygen enrichment of a flow of fuel in the form of solid particles carried by a carrier gas, by means of the use according to any one of Claims 1 to 4, in which method:
• the fuel flows inside a passage (40) in a flow direction,
• an oxidant having an oxygen content greater than the oxygen content of the carrier gas is introduced into the second tube (20) of the lance (31) on the side of the upstream end (11) of the outer tube (10), the lance (31) being positioned inside the passage (40) substantially in the direction of flow of the fuel, at least some of said oxidant being introduced into the flow of the fuel through the at least one overlap section (31) of the lance (31).

11. Method for combustion of a fuel in the form of solid particles carried by a carrier gas by means of a burner (60) according to any one of Claims 5 to 7 or by means of an installation according to either of Claims 8 and 9, in which method:
• the fuel flows inside the passage (40) of the burner (60) in a flow direction,
• an oxidant having an oxygen content greater than the oxygen content of the carrier gas is introduced into the second tube (20) of the lance (31) on the side of the upstream end (11) of the outer tube (10), the lance (31) being positioned inside the passage (40) substantially in the direction of flow of the fuel,
at least some of said oxidant being introduced into the flow of the fuel through the at least one overlap section (31) of the lance (31).

12. Method according to Claim 10 or 11, wherein the carrier gas is chosen from air, CO₂, recycled flue gases or mixtures of at least two of said gases.

13. Method according to any one of Claims 10 to 12, wherein the oxidant has an oxygen content of 50 vol% to 100 vol%, preferably from 80 vol% to 100 vol% and even more preferably from 90.0 vol% to 99.5 vol%.

14. Method according to any one of Claims 10 to 13, wherein the solid particles are chosen from powdered coal, powdered petcoke, powdered coke, ground solid waste and mixtures including one or more of said categories of particles.

15. Method according to any one of Claims 10 to 14, wherein the position of the at least one overlap section (31) is varied along the length L by sliding the second tube (20) inside the outer tube (10).
